# EUROPEAN PATENT APPLICATION

(11) **EP 4 675 784 A1**
(43) Date of publication of application: **07.01.2026**
(21) Application number: 23962002.4
(22) Date of filing: 22.12.2023
(51) Int. Cl.: H01M 50/204, H01M 10/6556

(54) **BATTERY AND ELECTRIC DEVICE**

(71) Applicant: Contemporary Amperex Technology Co., Limited, Ningde, Fujian 352100 (CN)
(72) Inventor: YAO, Pengcheng, Ningde, Fujian 352100 (CN); CHEN, Xingdi, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/141213
(87) International publication number: WO 2025/129680

(57) **Abstract**

Embodiments of the present application provide a battery and an electric device. The battery comprises a frame body, a battery cell, a first beam, and a heat exchange plate. The frame body defines an accommodating space. A first opening is formed in one end of the accommodating space. The battery cell is arranged in the accommodating space. The first beam is arranged in the accommodating space, two ends of the first beam are connected to the frame body, and the first beam is used for limiting expansion of the battery cell. The heat exchange plate covers the first opening and is used for exchanging heat with the battery cell, and the heat exchange plate is fixedly connected to the frame body and the first beam. When the battery is subjected to an external impact, the frame body and the first beam can restrain the heat exchange plate, so as to reduce the relative movement between the heat exchange plate and the battery cell, and improve the uniformity of heat exchange. In addition, the first beam can disperse the stress at the joint of the heat exchange plate and the frame body, reduce the risk of failure of the connection between the heat exchange plate and the frame body, improve the sealing performance of the battery, and improve the reliability of the battery.

## Description

### TECHNICAL FIELD

The present application relates to the technical field of batteries, and in particular, to a battery and an electric device.

### BACKGROUND

Batteries are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve battery reliability is a research direction in the battery technologies.

### SUMMARY

The present application provides a battery and an electric device, which can improve reliability.

In a first aspect, embodiments of the present application provide a battery. The battery includes a frame body, a battery cell, a first beam, and a heat exchange plate. The frame body defines an accommodating space in an enclosing manner. One end of the accommodating space is provided with a first opening. The battery cell is arranged in the accommodating space. The first beam is arranged in the accommodating space. Both ends of the first beam are connected to the frame body, and the first beam is configured to limit the expansion of the battery cell. The heat exchange plate lids the first opening and is configured to exchange heat with the battery cell. The heat exchange plate is fixedly connected to the frame body and the first beam.

When the battery is subjected to an external impact, the frame body and the first beam may restrain the heat exchange plate, so as to reduce the relative movement between the heat exchange plate and the battery cell and improve the uniformity of heat exchange. In addition, the first beam can attenuate the force received at the joint between the heat exchange plate and the frame body, reduce the risk of connection failure between the heat exchange plate and the frame body, improve the sealing performance of the battery, and improve the reliability of the battery.

In some embodiments, the heat exchange plate includes a flow channel zone and a non-flow channel zone. The flow channel zone is provided with a flow channel for a heat exchange medium to flow. A part of the non-flow channel zone is fixed to the frame body and the first beam.

A flow channel is not formed in the non-flow channel zone, and by fixing a part of the non-flow channel zone to the frame body and the first beam, when the battery is subjected to an external impact, the force transmitted to the flow channel zone can be reduced, the deformation of the flow channel can be reduced, the uniformity of heat exchange can be improved, and the risk of damage to the flow channel zone and leakage of the heat exchange medium can be reduced.

In some embodiments, the battery further includes a protection plate. The protection plate is arranged on a side of the heat exchange plate distal to the battery cell and is connected to the heat exchange plate.

The protection plate can protect the heat exchange plate, reduce the risk of direct impact on the heat exchange plate caused by external impurities, reduce the deformation of the heat exchange plate, improve the uniformity of heat exchange, reduce the risk of leakage of the heat exchange medium, and improve the reliability of the battery.

In some embodiments, a side of the protection plate facing the heat exchange plate is provided with a first recess. The heat exchange plate includes a flow channel zone and a non-flow channel zone. The flow channel zone is provided with a flow channel for a heat exchange medium to flow. In the thickness direction of the heat exchange plate, the projection of the flow channel zone in the thickness direction is located within the projection of the first recess. The protection plate includes an edge part arranged around the first recess. The edge part abuts against the non-flow channel zone, and the edge part, the non-flow channel zone, and the frame body are fixedly connected.

By providing the first recess, clearance can be provided for the flow channel zone, the distance between a bottom surface of the first recess and the flow channel zone can be increased, and the risk of direct compression of the flow channel zone by the protection plate can be reduced. The edge part is located at the outer periphery of the protection plate, and by fixing the edge part to the non-flow channel zone and the frame body, the stability of the protection plate can be improved. The edge part abutting against the non-flow channel zone may further enable sealing of the first recess.

In some embodiments, in the thickness direction, the bottom surface of the first recess is spaced apart from the flow channel zone. When the protection plate is subjected to pressure, the protection plate may deform. By spacing the flow channel zone apart from the bottom surface of the first recess, space for the deformation of the protection plate can be provided, thereby reducing the risk of direct compression of the flow channel zone by the protection plate.

In some embodiments, the protection plate further includes a first protrusion protruding from the bottom surface of the first recess. The first protrusion abuts against the non-flow channel zone, and the first protrusion, the non-flow channel zone, and the first beam are fixedly connected.

The first protrusion can compensate for the gap between the bottom surface of the first recess and the non-flow channel zone, so as to be able to abut against the non-flow channel zone, thereby achieving the fixed connection of the first protrusion, the non-flow channel zone, and the first beam, and increasing the strength of the battery.

In some embodiments, the protection plate further includes a second protrusion. The second protrusion protrudes from the surface of the edge part facing away from the non-flow channel zone, and the first recess is formed on the protection plate at a position corresponding to the second protrusion. The first protrusion is connected to the second protrusion. By providing the second protrusion, the depth of the first recess can be increased, and the strength of the protection plate can be increased.

In some embodiments, the protection plate is further provided with a second recess. The second recess is recessed from the surface of the protection plate facing away from the heat exchange plate, and the second recess is formed on the protection plate at a position corresponding to the first protrusion.

By providing the second recess, the forming process of the protection plate can be simplified, the weight of the protection plate can be reduced, and the difficulty in connecting the first protrusion to the non-flow channel zone can be reduced.

In some embodiments, the battery further includes a power distribution box. The power distribution box includes a housing body and an electric component. The housing body is located on the side of the protection plate facing away from the heat exchange plate, the housing body and the protection plate define an accommodating cavity, and the electric component is arranged in the accommodating cavity and is electrically connected to the battery cell. An end of the housing body facing the protection plate is provided with an end surface, and the end surface abuts against the protection plate; in the thickness direction, the projection of the end surface does not overlap with the projection of the second recess.

Since the power distribution box is arranged on the side of the protection plate facing away from the heat exchange plate, when thermal runaway occurs in the battery cell, the protection plate and the heat exchange plate can protect the power distribution box and reduce the risk of damage to the electric component caused by the high-temperature substances released by the battery cell. The heat exchange plate may further exchange heat with the power distribution box through the protection plate, so as to adjust the temperature of the power distribution box. By arranging the power distribution box outside the frame body, the utilization of the internal space of the battery can also be improved. The end surface of the housing body is arranged offset from the second recess, so as to reduce the risk of communication between the internal and external spaces of the housing body via the second recess, and improve the sealing performance and reliability of the power distribution box.

In some embodiments, the first beam extends in the first direction; the protection plate is provided with a plurality of second recesses. The plurality of second recesses are spaced apart from each other in the first direction. A part of the end surface is fixed to a part of the protection plate located between two adjacent second recesses. By using the part between the second recesses to fix the housing body, the second recesses can be offset from the end surface of the housing body, and the space utilization can be improved as well.

In some embodiments, the protection plate further includes a third protrusion protruding from the bottom surface of the first recess. The third protrusion abuts against the non-flow channel zone, and the third protrusion, the non-flow channel zone, and the frame body are fixedly connected. The third protrusion can compensate for the gap between the bottom surface of the first recess and the non-flow channel zone, so as to be able to abut against the non-flow channel zone, thereby achieving the fixed connection of the third protrusion, the non-flow channel zone, and the frame body, and increasing the strength of the battery.

In some embodiments, the protection plate includes a plurality of third protrusions spaced apart from each other in the first direction. In the first direction, a part of the flow channel zone is located between two adjacent third protrusions. In the embodiments of the present application, the space between the third protrusions can be used to improve space utilization on the premise that the third protrusions are offset from the flow channel zone.

In some embodiments, the frame body includes a second beam and a third beam oppositely arranged in a second direction, the first beam, the second beam, and the third beam all extend in the first direction, and the first direction is perpendicular to the second direction. In the second direction, the battery cell is located between the second beam and the first beam. The third protrusion, the non-flow channel zone, and the second beam are fixedly connected.

The first beam and the second beam are configured to limit the battery cell from both sides. The third protrusion, the non-flow channel zone, and the second beam are fixedly connected, so as to increase the structural strength of the battery and reduce the risk of connection failure between the heat exchange plate and the frame body.

In some embodiments, in the second direction, the minimum dimension of the second beam is greater than the minimum dimension of the third beam. The second beam has a large dimension and strength and thus can withstand the expansion force of the battery cell and be fixedly connected to both the third protrusion and the edge part, thereby increasing the overall structural strength of the battery.

In some embodiments, the battery further includes a first connecting member and a second connecting member. The first connecting member fixes the protection plate and the heat exchange plate to the frame body, and the second connecting member fixes the protection plate and the heat exchange plate to the first beam.

The first connecting member fixes both the protection plate and the heat exchange plate to the frame body, thereby improving the stability of the protection plate and the heat exchange plate. The second connecting member fixes both the protection plate and the heat exchange plate to the first beam, thereby improving the stability of the protection plate and the heat exchange plate.

In some embodiments, the battery further includes a reinforcing beam. The reinforcing beam is arranged on a side of the protection plate facing away from the heat exchange plate and is fixed to the protection plate. The reinforcing beam can improve the overall strength of the battery. It can reduce the deformation of the protection plate and reduce the risk of compression of the heat exchange plate by the protection plate when the protection plate is subjected to an external impact, thereby improving the reliability of the battery.

In some embodiments, the reinforcing beam is configured for the mounting of a seat of a vehicle. In the embodiments of the present application, a seat mounting beam in the vehicle can be omitted, thereby saving vehicle parts, improving the integration level of the vehicle, and simplifying the assembly process of the vehicle.

In some embodiments, the heat exchange plate includes a flow channel zone and a non-flow channel zone. The flow channel zone is provided with a flow channel for a heat exchange medium to flow. At least one of the flow channel zone and the non-flow channel zone is bonded to the protection plate. By bonding the flow channel zone or the non-flow channel zone to the protection plate, the connection strength between the heat exchange plate and the protection plate can be increased, and the stability of the battery can be improved.

In some embodiments, the first opening is arranged at the upper end of the accommodating space in a vertical direction, and the heat exchange plate is located on the upper side of the frame body. Since the heat exchange plate is arranged on the upper side of the frame body, when the lower side of the battery is subjected to an external impact, the impact force received by the heat exchange plate is small, thereby reducing the deformation of the heat exchange plate, improving the uniformity of heat exchange, reducing the risk of leakage of the heat exchange medium, and improving the reliability of the battery.

In some embodiments, the battery cell is fixed to the heat exchange plate. The heat exchange plate can carry the battery cell while exchanging heat with the battery cell. By fixing the battery cell to the heat exchange plate, when the battery is subjected to an external impact, the relative movement between the battery cell and the heat exchange plate can also be reduced, thereby improving the stability of heat exchange between the heat exchange plate and the battery cell.

In some embodiments, the other end of the accommodating space is provided with a second opening. The battery further includes a bottom plate. The bottom plate lids the second opening and is connected to the frame body. The bottom plate and the heat exchange plate can seal the accommodating space from both sides, thereby improving the sealing performance of the battery.

In a second aspect, the embodiments of the present application further provide an electric device, which includes the battery according to any one of the embodiments in the first aspect. The battery is configured to provide electric energy.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a structural schematic view of a vehicle according to some embodiments of the present application;
FIG. 2 is an exploded schematic view of a battery according to some embodiments of the present application;
FIG. 3 is an exploded schematic view of the battery cell shown in FIG. 2;
FIG. 4 is an enlarged schematic view of the circled portion A in FIG. 2;
FIG. 5 is a structural schematic view of some components of the battery shown in FIG. 2;
FIG. 6 is an enlarged schematic view of the circled portion C in FIG. 5;
FIG. 7 is a partial cross-sectional schematic view taken along the E-E direction in FIG. 6;
FIG. 8 is a schematic top view of a battery according to some embodiments of the present application;
FIG. 9 is a cutaway schematic view taken along the F-F direction in FIG. 8;
FIG. 10 is an enlarged schematic view of the circled portion in FIG. 9;
FIG. 11 is an enlarged schematic view of the circled portion D in FIG. 5;
FIG. 12 is a schematic bottom view of a protection plate of a battery according to some embodiments of the present application;
FIG. 13 is a schematic top view of a protection plate, a heat exchange plate, and a housing body of a battery according to some embodiments of the present application;
FIG. 14 is a partial cutaway schematic view taken along the G-G direction in FIG. 13;
FIG. 15 is an enlarged schematic view of the boxed portion in FIG. 14;
FIG. 16 is an enlarged schematic view of the circled portion in FIG. 8;
FIG. 17 is a partial cutaway schematic view taken along the H-H direction in FIG. 13;
FIG. 18 is an enlarged schematic view of the circled portion in FIG. 17;
FIG. 19 is an enlarged schematic view of the circled portion B in FIG. 2; and
FIG. 20 is a schematic view of an electric device according to some other embodiments of the present application.

Reference numerals in the drawings are explained as follows:
1. vehicle; 2. battery; 3. controller; 4. motor; 5. seat;
10. frame body; 10a. accommodating space; 10b. first opening; 10c. second opening; 11. second beam; 12. third beam; 13. fourth beam;
20. battery cell; 21. housing; 211. battery housing body; 2111. bottom housing wall; 212. end cover; 22. electrode assembly; 23. electrode terminal; 24. pressure relief mechanism;
30. heat exchange plate; 30a. flow channel zone; 30b. non-flow channel zone; 31. flow channel; 32. first plate; 33. second plate; 331. fourth recess; 332. fourth protrusion;
40. first beam;
50. protection plate; 51. first recess; 511. bottom surface; 52. edge part; 53. first protrusion; 531. top surface of the first protrusion; 54. second protrusion; 541. top surface of the second protrusion; 55. second recess; 56. third protrusion; 57. third recess; 60. reinforcing beam;
70. power distribution box; 71. housing body; 711. housing body opening; 712. end surface; 72. electric component; 73. cover plate;
80. bottom plate; 90. first connecting member; 91. second connecting member;
X. first direction; Y. second direction; and Z. thickness direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount" and "connect" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

In the embodiments of the present application, "parallel" includes not only a case of being absolutely parallel, but also a case of being approximately parallel according to common knowledge in engineering. In addition, "perpendicular" includes not only a case of being absolutely perpendicular, but also a case of being approximately perpendicular according to common knowledge in engineering. Illustratively, if the included angle between two directions is 85° to 90°, it may be considered that the two directions are perpendicular; if the included angle between two directions is 0° to 5°, it may be considered that the two directions are parallel.

The term "plurality of" used in the present application refers to no less than two (including two).

The battery mentioned in the embodiments of the present application refers to a single physical module including one or a plurality of battery cells to provide higher voltage and capacity.

The battery cell may be a secondary battery cell, which refers to a battery cell that can continue to be used by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickelcadmium battery cell, a lead storage battery cell, or the like.

In some embodiments, the battery further includes a case, and the battery cell is accommodated in the case. The case can protect the battery cell from the outside, thereby reducing the risk of battery cell failure.

The battery cell generates heat during charging and discharging. When a plurality of battery cells are used in groups, heat may accumulate. If the heat is not effectively removed, it may lead to an increase in the temperature of the battery cells, thereby accelerating the aging of the battery cells. In addition, excessive temperature tends to cause thermal runaway, thereby resulting in safety hazards. When the battery cell is in a low-temperature environment, the service life may be shortened, and the discharging capacity may be weakened.

In the related art, an independent heat exchange plate is generally provided inside the battery, and the heat exchange plate can exchange heat with the battery cell to control the operating temperature of the battery cell within an appropriate range. Specifically, a flow channel is generally provided inside the heat exchange plate, and when an external heat exchange medium flows through the flow channel of the heat exchange plate, the heat exchange medium exchanges heat with the battery cell through the heat exchange plate to adjust the temperature of the battery cell.

However, the independent heat exchange plate may occupy space, thereby reducing the energy density of the battery.

In some embodiments, in the battery, the case and the heat exchange plate are integrated together, and the heat exchange plate is used as a case wall of the case. In this way, components can be saved, thereby simplifying the structure of the battery and increasing energy density.

Given the varying application scenarios of different electric devices, the battery is required to be able to adapt to a wide range of harsh application scenarios when applied to different electric devices. The heat exchange plate is generally fixed only to the frame body of the case. When the battery vibrates, the constraint of the heat exchange plate by the frame body is insufficient, and the heat exchange plate may shift significantly relative to the battery cell, thereby resulting in non-uniform heat exchange. When battery vibration is severe, the connection between the heat exchange plate and the frame body may fail, thereby affecting the reliability of the battery.

In view of this, the embodiments of the present application provides a technical solution in which the heat exchange plate is fixed to both the frame body of the case and the beam in the frame body, so as to improve the stability of the heat exchange plate, reduce the relative movement between the heat exchange plate and the battery cell, improve the uniformity of heat exchange, reduce the risk of connection failure between the heat exchange plate and the frame body, and improve the reliability of the battery.

The battery described in the embodiments of the present application is applicable to an electric device in which the battery is used.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

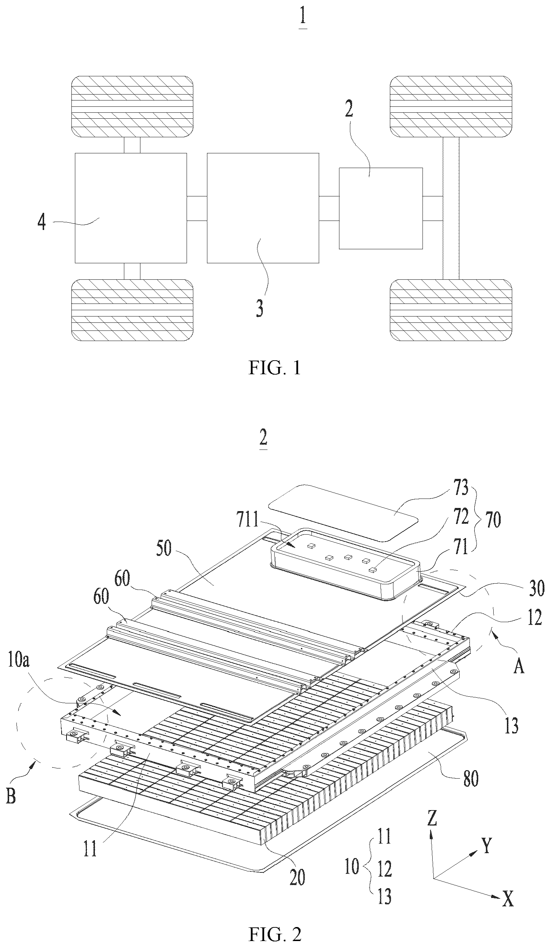

FIG. 1 is a structural schematic view of a vehicle according to some embodiments of the present application.

As shown in FIG. 1, a battery 2 is provided inside a vehicle 1, and the battery 2 may be provided at the bottom, the head, or the tail of the vehicle 1. The battery 2 may be configured to power the vehicle 1. For example, the battery 2 may serve as an operation power source of the vehicle 1.

The vehicle 1 may further include a controller 3 and a motor 4. The controller 3 is configured to control the battery 2 to power the motor 4, e.g., for operation power needed by the vehicle 1 for start-up, navigation, and driving.

In some embodiments of the present application, the battery 2 may not only serve as the operation power source for the vehicle 1, but also as a driving power source for the vehicle 1 to, instead of or in part instead of fuel or natural gas, provide driving power for the vehicle 1.

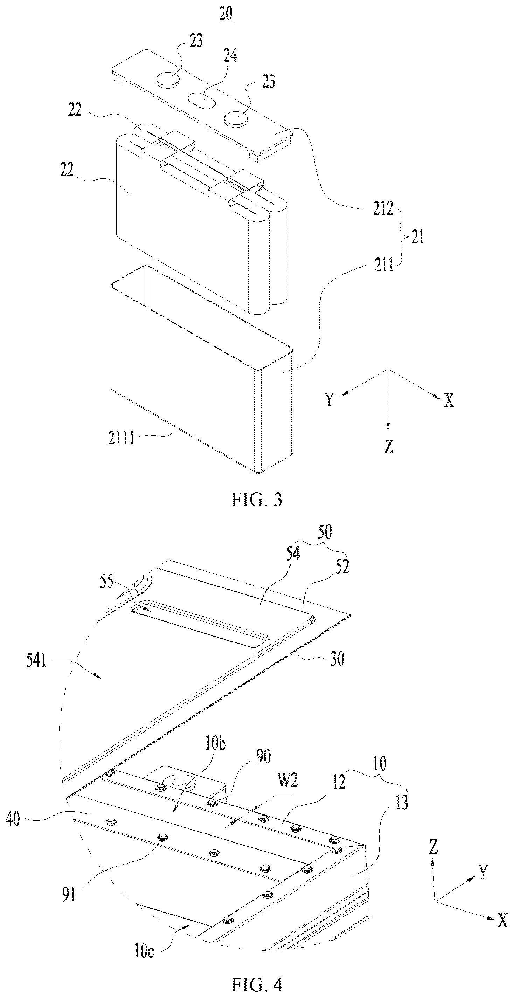

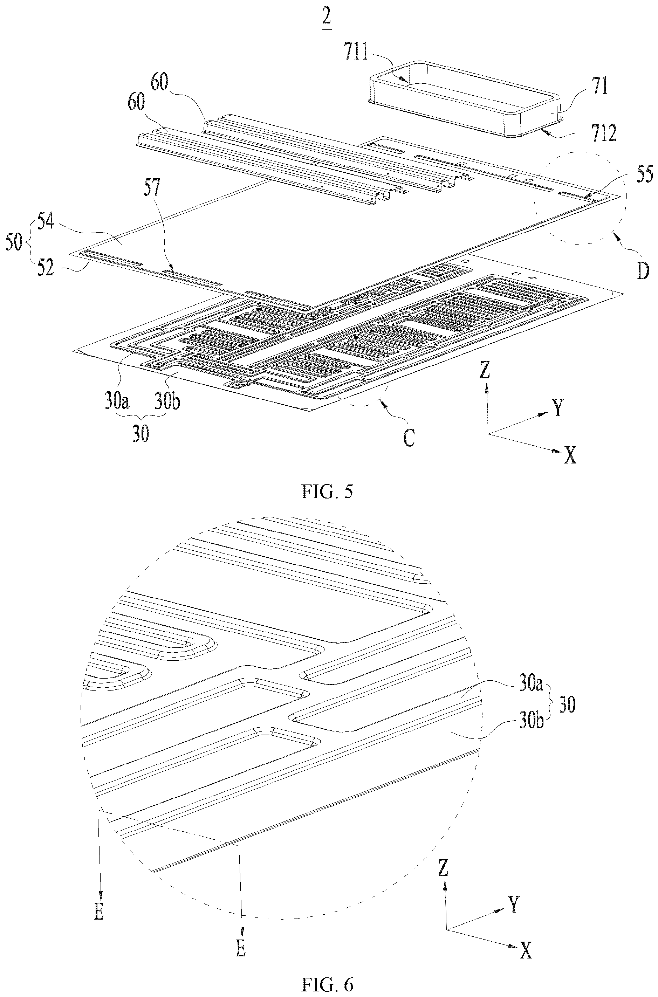

FIG. 2 is an exploded schematic view of a battery according to some embodiments of the present application; FIG. 3 is an exploded schematic view of the battery cell shown in FIG. 2; FIG. 4 is an enlarged schematic view of the circled portion A in FIG. 2; FIG. 5 is a structural schematic view of some components of the battery shown in FIG. 2.

Referring to FIGs. 2-5, the battery 2 according to the embodiments of the present application includes a frame body 10 and a battery cell 20. The frame body 10 defines an accommodating space 10a in an enclosing manner, and the battery cell 20 is arranged in the accommodating space 10a.

In the battery 2, one or a plurality of battery cells 20 may be provided. If a plurality of battery cells 20 are provided, the plurality of battery cells 20 may be connected in series, in parallel, or in series-parallel. The series-parallel connection means that both series connection and parallel connection are present in the connection of the plurality of battery cells 20.

The plurality of battery cells 20 may be directly connected in series, in parallel, or in series-parallel, and then the whole formed by the plurality of battery cells 20 is accommodated in the accommodating space 10a. Certainly, it may also be that the plurality of battery cells 20 are first connected in series, in parallel, or in series-parallel to form battery modules, and then the plurality of battery modules are connected in series, in parallel, or in series-parallel to form a whole and accommodated in the accommodating space 10a.

As an example, the battery cell 20 may be a prismatic battery cell, a pouch battery cell, or a battery cell of other shapes. The prismatic battery cell includes a square-housing battery cell, a blade-shaped battery cell, and a multi-prismatic battery cell, and the multi-prismatic battery cell is, e.g., a hexagonal prismatic battery cell.

The frame body 10 may be a rectangular frame body 10, a circular frame body 10, a polygonal frame body 10, an elliptical frame body 10, or a frame body 10 of other shapes.

The material of the frame body 10 may be steel, aluminum, aluminum alloy, or the like.

The frame body 10 can protect the battery cell 20 from the outer periphery, thereby reducing the risk of impact on the battery cell 20 caused by external impurities.

In some embodiments, the battery cell 20 includes a housing 21 and an electrode assembly 22. The electrode assembly 22 is accommodated in the housing 21.

The electrode assembly 22 is a component where the electrochemical reaction occurs in the battery cell 20. One or more electrode assemblies 22 may be accommodated in the housing 21.

As an example, the electrode assembly 22 includes a positive electrode plate and a negative electrode plate. The portions of the positive electrode plate and the negative electrode plate that contain the active substance constitute the main body part of the electrode assembly 22, and the portions of the positive electrode plate and the negative electrode plate that do not contain the active substance each constitute a tab. The tab may include a positive electrode tab and a negative electrode tab. The positive electrode tab and the negative electrode tab may be located together at an end of the main body part or respectively at two ends of the main body part.

During charging and discharging of the battery cell 20, the positive electrode active substance and the negative electrode active substance react with the electrolyte to generate a current, and the current is conducted through the tab.

The housing 21 is of a hollow structure, and an inner cavity for accommodating the electrode assembly 22 and the electrolyte is formed inside the housing. The shape of the housing 21 may be determined according to the specific shape of the electrode assembly 22. For example, if the electrode assembly 22 is of a rectangular parallelepiped structure, a rectangular parallelepiped housing may be used; if the electrode assembly 22 is of a cylinder structure, a cylinder housing may be used.

As an example, the housing 21 includes a battery housing body 211 and an end cover 212. The battery housing body 211 is provided with an opening, and the end cover 212 is configured to lid the opening. The end cover 212 is connected to the battery housing body 211 by means of welding, bonding, snap-fit connection, or other manners.

The battery housing body 211 may be open at an end or open at both ends. In some examples, the battery housing body 211 may be of a structure that is open at one side, one end cover 212 is provided, and the end cover lids the battery housing body 211. In other examples, the battery housing body 211 may also be of a structure that is open at both sides, two end covers 212 are provided, and the two end covers 212 lid the two openings of the battery housing body 211, respectively.

In some embodiments, the battery cell 20 further includes an electrode terminal 23. The electrode terminal 23 may be configured to be electrically connected to the electrode assembly 22 to output or input the electric energy of the battery cell 20.

In some embodiments, the electrode terminal 23 is arranged on the battery housing body 211 or the end cover 212.

In some embodiments, two electrode terminals 23 are provided, and the two electrode terminals 23 are electrically connected to the tab of the positive electrode plate and the tab of the negative electrode plate, respectively. The current generated by the electrode assembly 22 can be transmitted to the outside through the electrode terminals 23, and an external power supply can also charge the electrode assembly 22 through the electrode terminals 23.

In some embodiments, the battery cell 20 further includes a pressure relief mechanism 24.

In the case of a short circuit, overcharging, or the like, thermal runaway may occur within the battery cell 20, resulting in a rapid increase in internal pressure of the housing 21, thereby posing a risk of rupture of the battery cell 20.

The pressure relief mechanism 24 may enable the internal and external spaces of housing 21 to be in communication with each other when the internal pressure or temperature of the housing 21 reaches a threshold, thereby relieving the internal pressure of the battery cell 20 and reducing the risk of rupture of the battery cell 20.

The pressure relief mechanism 24 refers to an element or a component that is actuated to relieve the internal pressure or reduce the internal temperature of the battery cell 20 when the internal pressure or temperature reaches a preset threshold. The designed threshold varies according to different design requirements. The threshold may depend on the material of one or more of the positive electrode plate, the negative electrode plate, the electrolyte, and the separator in the battery cell 20. The pressure relief mechanism 24 may take the form of an anti-explosion valve, a gas valve, a pressure relief valve, a safety valve, or the like, and may specifically adopt a pressure-sensitive or temperature-sensitive element or configuration.

In some embodiments, the pressure relief mechanism 24 may be arranged on the battery housing body 211, or may be arranged on the end cover 212.

In some embodiments, one end of the accommodating space 10a is provided with a first opening 10b. The battery 2 further includes a heat exchange plate 30, the heat exchange plate 30 is fixed to the frame body 10 and lids the first opening 10b, and the heat exchange plate 30 is configured to exchange heat with the battery cell 20.

The heat exchange plate 30 may be an integrally formed component, or may be formed by connecting a plurality of independently formed components.

As an example, the first opening 10b may be located at the upper end of the accommodating space 10a, or may be located at the lower end of the accommodating space 10a, or may be located at the side end of the accommodating space 10a.

The battery cell 20 may be fixed to the heat exchange plate 30, or may be fixed to the frame body 10, or may be fixed to other components of the battery 2.

As an example, the electrode terminals 23 of the battery cell 20 may face the heat exchange plate 30, or may face away from the heat exchange plate 30, or may face the frame body 10.

As an example, the pressure relief mechanism 24 of the battery cell 20 may face the heat exchange plate 30, or may face away from the heat exchange plate 30, or may face the frame body 10.

The heat exchange plate 30 may be connected to the frame body 10 by means of bonding, fastener-based connection, welding, snap-fit connection, or other manners.

The heat exchange plate 30 can seal the first opening 10b while exchanging heat with the battery cell 20. In this way, components can be saved, thereby simplifying the structure of the battery 2, improving the integration level of the battery 2, and increasing energy density of the battery 2.

In some embodiments, the battery 2 further includes a first beam 40. The first beam 40 is arranged in the accommodating space 10a, and both ends of the first beam 40 are connected to the frame body 10. The first beam 40 can increase the overall strength of the battery 2.

In some embodiments, the first beam 40 is configured to limit the expansion of the battery cell 20. As an example, the first beam 40 may also be referred to as an expansion beam.

The battery cell 20 may expand during charging and discharging, and the first beam 40 can limit the expansion of the battery cell 20, reduce the deformation of the battery cell 20, and improve the charging and discharging performance of the battery cell 20. In addition, the first beam 40 can withstand the expansion force of the battery cell 20. In this way, the force received by the frame body 10 can be reduced, the deformation of the frame body 10 can be reduced, and the reliability of the battery 2 can be improved.

In some embodiments, the heat exchange plate 30 is fixedly connected to the frame body 10 and the first beam 40. When the battery 2 is subjected to an external impact, the frame body 10 and the first beam 40 may restrain the heat exchange plate 30, so as to reduce the relative movement between the heat exchange plate 30 and the battery cell 20 and improve the uniformity of heat exchange. In addition, the first beam 40 can attenuate the force received at the joint between the heat exchange plate 30 and the frame body 10, reduce the risk of connection failure between the heat exchange plate 30 and the frame body 10, improve the sealing performance of the battery 2, and improve the reliability of the battery 2.

In some embodiments, a flow channel for a heat exchange medium to flow is provided inside the heat exchange plate 30. As an example, the heat exchange medium may be liquid or gas, such as water.

In some embodiments, the battery 2 further includes a protection plate 50. The protection plate 50 is arranged on a side of the heat exchange plate 30 distal to the battery cell 20.

The protection plate 50 may be a plate with an equal thickness, or may be a plate with different thicknesses.

The material of the protection plate 50 may be metal, plastic, a metal-plastic composite material, or the like. Optionally, the metal may be aluminum, aluminum alloy, stainless steel, nickel-plated steel, or the like.

The protection plate 50 may be an integrally formed plate, or may be formed by splicing a plurality of plates.

The protection plate 50 can protect the heat exchange plate 30, reduce the risk of direct impact on the heat exchange plate 30 caused by external impurities, reduce the deformation of the heat exchange plate 30, improve the uniformity of heat exchange, reduce the risk of leakage of the heat exchange medium, and improve the reliability of the battery 2.

In some embodiments, the protection plate 50 is connected to the heat exchange plate 30. Illustratively, the protection plate 50 may be connected to the heat exchange plate 30 by means of bonding, fastener-based connection, welding, snap-fit connection, or other manners.

In some embodiments, the protection plate 50 is bonded to the heat exchange plate 30. By bonding the protection plate 50 to the heat exchange plate 30, the connection strength between the heat exchange plate 30 and the protection plate 50 can be increased, and the stability of the protection plate 50 can be improved.

In some embodiments, the protection plate 50 is bonded to the heat exchange plate 30 by a structural adhesive.

In some embodiments, the protection plate 50 and the heat exchange plate 30 are further connected by other components, such as fasteners.

In some embodiments, the thickness of the protection plate 50 may be 0.1 mm to 50 mm. Optionally, the thickness of the protection plate 50 is 0.4 mm to 5 mm.

As an example, the thickness of the protection plate 50 may be 0.1 mm, 0.2 mm, 0.4 mm, 0.8 mm, 1 mm, 1.5 mm, 2 mm, 3 mm, 4 mm, 5 mm, 8 mm, 10 mm, 15 mm, 20 mm, 35 mm, 40 mm, 45 mm, or 50 mm.

In the embodiments of the present application, the thickness of the protection plate 50 is limited to be greater than or equal to 0.1 mm, so as to increase the structural strength of the protection plate 50 and reduce the deformation of the protection plate 50 when being stepped on. In the embodiments of the present application, the thickness of the protection plate 50 is limited to be less than or equal to 50 mm, so as to reduce the weight and volume of the protection plate 50 and reduce the loss of energy density of the battery 2.

In some embodiments, the battery 2 further includes a reinforcing beam 60. The reinforcing beam 60 is arranged on a side of the protection plate 50 facing away from the heat exchange plate 30 and is fixed to the protection plate 50.

The reinforcing beam 60 and the protection plate 50 may be independently formed components, and the two may be fixedly connected by means of welding, bonding, fastener-based connection, or other manners. Alternatively, the reinforcing beam 60 and the protection plate 50 may also be integrally formed.

One or a plurality of reinforcing beams 60 may be provided.

The reinforcing beam 60 can improve the overall strength of the battery 2. It can reduce the deformation of the protection plate 50 and reduce the risk of compression of the heat exchange plate 30 by the protection plate 50 when the protection plate 50 is subjected to an external impact, thereby improving the reliability of the battery 2.

In some embodiments, the reinforcing beam 60 is configured to be connected to external components. The reinforcing beam 60 of the battery 2 can provide mounting points for some components of the electric device, thereby reducing the number of parts, improving the integration level, and simplifying the assembly process.

In some embodiments, the reinforcing beam 60 is configured for the mounting of the seat 5 of the vehicle. In the embodiments of the present application, a seat mounting beam in the vehicle can be omitted, thereby saving vehicle parts, improving the integration level of the vehicle, and simplifying the assembly process of the vehicle.

In some embodiments, the reinforcing beam 60 is formed by bending a metal sheet.

In some embodiments, the battery 2 includes a plurality of reinforcing beams 60.

In some embodiments, the battery 2 further includes a power distribution box 70. The power distribution box 70 includes a housing body 71 and an electric component 72. The housing body 71 is located on the side of the protection plate 50 facing away from the heat exchange plate 30, the housing body 71 and the protection plate 50 define an accommodating cavity, and the electric component 72 is arranged in the accommodating cavity and is electrically connected to the battery cell 20.

The power distribution box 70 may control the battery 2. As an example, the power distribution box 70 protects the battery 2 and transmits and distributes power during charging and discharging of the battery 2.

Since the power distribution box 70 is arranged on the side of the protection plate 50 facing away from the heat exchange plate 30, when thermal runaway occurs in the battery cell 20, the protection plate 50 and the heat exchange plate 30 can protect the power distribution box 70 and reduce the risk of damage to the electric component 72 caused by the high-temperature substances released by the battery cell 20. The heat exchange plate 30 may further exchange heat with the power distribution box 70 through the protection plate 50, so as to adjust the temperature of the power distribution box 70. By arranging the power distribution box 70 outside the frame body 10, the utilization of the internal space of the battery 2 can also be improved.

Generally, the voltage of the battery is high. If electric components (for example, a motor controller, an air conditioning system, and a charging system) of the electric device are directly connected to the battery, the wire harness of the battery may become disordered. Therefore, a power distribution box is required to be added to the battery to distribute the high voltage of the battery. The power distribution box adopts a centralized power distribution scheme, featuring a compact structural design, convenient wiring layout, and quick and easy maintenance. According to the system architecture requirements of different customers, the power distribution box further needs to integrate part of the intelligent control management units of the battery management system, thereby further simplifying the complexity of power distribution of the entire electric device.

In some embodiments, the electric component 72 includes one or more of a fuse, a relay, a resistor, a current sensor, and a battery management assembly to facilitate control of the battery 2.

A fuse is an electric component that disconnects the circuit by fusion of its fusible element with the heat generated by itself when the current exceeds a specified value. A relay is an electrical control component, and is an electric component that makes a controlled quantity undergo a preset step change in an electrical output circuit when the change in an input quantity (excitation quantity) meets specified requirements. A current sensor is a detection apparatus that can sense information about a measured current and can convert, according to a specific rule, the measured and sensed information into an electric signal that meets a specific standard requirement or information in another required form for outputting, so as to meet requirements of information transmission, processing, storage, display, recording, and control, etc. The battery management assembly is configured to intelligently manage and maintain each battery cell, reduce the risk of overcharging and overdischarging of the battery, extend the service life of the battery, and monitor the status of the battery.

Illustratively, the battery management assembly includes a circuit board.

In some embodiments, the power distribution box 70 is located directly below or behind the rear seat of the vehicle. By arranging the power distribution box 70 below or behind the rear seat of the vehicle, the space of the vehicle can be greatly utilized.

In some embodiments, the housing body 71 of the power distribution box 70 is fixed to the protection plate 50 by welding.

In some embodiments, an end of the housing body 71 distal to the protection plate 50 is provided with a housing body opening 711; the power distribution box 70 further includes a cover plate 73, and the cover plate 73 is connected to the housing body 71 and lids the housing body opening 711.

The cover plate 73 can seal the housing body 71 to prevent external impurities from entering the housing body 71, thereby reducing the risk of corrosion and damage to the electric component 72 caused by the external impurities.

In some embodiments, the cover plate 73 is detachably connected to the housing body 71. When the electric component 72 fails, the cover plate 73 can be removed to facilitate the maintenance of the electric component 72.

In some embodiments, the first opening 10b is arranged at the upper end of the accommodating space 10a in a vertical direction, and the heat exchange plate 30 is located on the upper side of the frame body 10.

As an example, when the battery 2 is mounted in the electric device, the heat exchange plate 30 is located on the upper side of the accommodating space 10a in the vertical direction. During processes such as manufacturing and transportation of the battery 2, the heat exchange plate 30 is not required to be located on the upper side of the accommodating space 10a in the vertical direction.

Since the heat exchange plate 30 is arranged on the upper side of the frame body 10, when the lower side of the battery 2 is subjected to an external impact, the impact force received by the heat exchange plate 30 is small, thereby reducing the deformation of the heat exchange plate 30, improving the uniformity of heat exchange, reducing the risk of leakage of the heat exchange medium, and improving the reliability of the battery 2.

In some embodiments, the battery cell 20 is fixed to the heat exchange plate 30. The heat exchange plate 30 can carry the battery cell 20 while exchanging heat with the battery cell 20. By fixing the battery cell 20 to the heat exchange plate 30, when the battery 2 is subjected to an external impact, the relative movement between the battery cell 20 and the heat exchange plate 30 can also be reduced, thereby improving the stability of heat exchange between the heat exchange plate 30 and the battery cell 20.

In some embodiments, the battery cell 20 is bonded to the heat exchange plate 30. The bonding process is simple and exhibits high stability.

In some embodiments, the battery cell 20 is bonded to the heat exchange plate 30 by a thermally conductive adhesive. The thermally conductive adhesive has low thermal resistance. By bonding the battery cell 20 to the heat exchange plate 30 by the thermally conductive adhesive, the heat exchange efficiency between the heat exchange plate 30 and the battery cell 20 can be improved.

In some embodiments, a side of the battery cell 20 distal to the heat exchange plate 30 is provided with electrode terminals 23.

The electrode terminals 23 are generally arranged in a protruding manner, and by arranging the electrode terminals 23 on the side of the battery cell 20 distal to the heat exchange plate 30, the risk of interference between the busbar component connected to the electrode terminals 23 and the heat exchange plate 30 can be reduced, and the heat exchange area between the battery cell 20 and the heat exchange plate 30 can be increased, thereby improving the heat exchange efficiency.

In some embodiments, two electrode terminals 23 are both arranged on the side of the battery cell 20 distal to the heat exchange plate 30.

In some embodiments, the battery housing body 211 includes a bottom housing wall 2111 opposite to the end cover 212. The bottom housing wall 2111 is bonded to the heat exchange plate 30. The two electrode terminals 23 are mounted on the end cover 212.

In some embodiments, the side of the battery cell 20 distal to the heat exchange plate 30 is provided with the pressure relief mechanism 24. When thermal runaway occurs in the battery cell 20, the high-temperature and high-pressure substances released via the pressure relief mechanism 24 do not directly impact the heat exchange plate 30, thereby reducing the risk of melting of the heat exchange plate 30 and reducing the leakage of the heat exchange medium.

In some embodiments, the electrode terminals 23 and the pressure relief mechanism 24 are all arranged on the side of the battery cell 20 distal to the heat exchange plate 30.

In some embodiments, the other end of the accommodating space 10a is provided with a second opening 10c. The battery 2 further includes a bottom plate 80. The bottom plate 80 lids the second opening 10c and is connected to the frame body 10.

The bottom plate 80 and the heat exchange plate 30 can seal the accommodating space 10a from both sides, thereby improving the sealing performance of the battery 2.

In some embodiments, the battery 2 includes a case. The case includes the bottom plate 80, the heat exchange plate 30, and the frame body 10.

In some embodiments, the heat exchange plate 30 and the bottom plate 80 are located on the upper side and the lower side of the frame body 10 in the vertical direction, respectively.

In some embodiments, the battery cell 20 is fixed to the heat exchange plate 30. The bottom plate 80 does not need to carry the battery cell 20. In this way, the strength requirements for the bottom plate 80 can be lowered, thereby reducing the thickness and weight of the bottom plate 80 and increasing the energy density of the battery 2.

In some embodiments, the frame body 10 includes a second beam 11 and a third beam 12. The first beam 40, the second beam 11, and the third beam 12 all extend in a first direction X, and the second beam 11, the first beam 40, and the third beam 12 are spaced apart from each other in a second direction Y. The first direction X intersects with the second direction Y. Optionally, the first direction X is perpendicular to the second direction Y.

In some embodiments, in the second direction Y, the battery cell 20 is located between the second beam 11 and the first beam 40. The first beam 40 and the second beam 11 are configured to limit the battery cell 20 from both sides.

In some embodiments, a plurality of battery cells 20 are arranged in the second direction Y.

In some embodiments, the frame body 10 further includes two fourth beams 13 oppositely arranged in the first direction X. The fourth beam 13 extends in the second direction Y, and both ends of the fourth beam 13 in the second direction Y are connected to the second beam 11 and the third beam 12, respectively.

Both ends of the first beam 40 in the first direction X are connected to the two fourth beams 13, respectively.

In some embodiments, the heat exchange plate 30 is fixed to the second beam 11, the third beam 12, and the two fourth beams 13.

In some embodiments, the battery 2 further includes a first connecting member 90. The first connecting member 90 fixes the protection plate 50 and the heat exchange plate 30 to the frame body 10.

The first connecting member 90 fixes both the protection plate 50 and the heat exchange plate 30 to the frame body 10, thereby improving the stability of the protection plate 50 and the heat exchange plate 30.

In some embodiments, the first connecting member 90 passes through the protection plate 50 and the heat exchange plate 30 and is fixed to the frame body 10.

In some embodiments, a plurality of first connecting members 90 are provided, and the plurality of first connecting members 90 are spaced apart from each other in a circumferential direction of the frame body 10.

In some embodiments, the first connecting member 90 may include a flow drill screw (FDS), a bolt, or other fasteners.

In some embodiments, the battery 2 further includes a second connecting member 91. The second connecting member 91 fixes the protection plate 50 and the heat exchange plate 30 to the first beam 40.

The second connecting member 91 fixes both the protection plate 50 and the heat exchange plate 30 to the first beam 40, thereby improving the stability of the protection plate 50 and the heat exchange plate 30.

In some embodiments, the second connecting member 91 passes through the protection plate 50 and the heat exchange plate 30 and is fixed to the first beam 40.

In some embodiments, a plurality of second connecting members 91 are provided, and the plurality of second connecting members 91 are spaced apart from each other in the first direction X.

In some embodiments, the second connecting member 91 may include a flow drill screw (FDS), a bolt, or other fasteners.

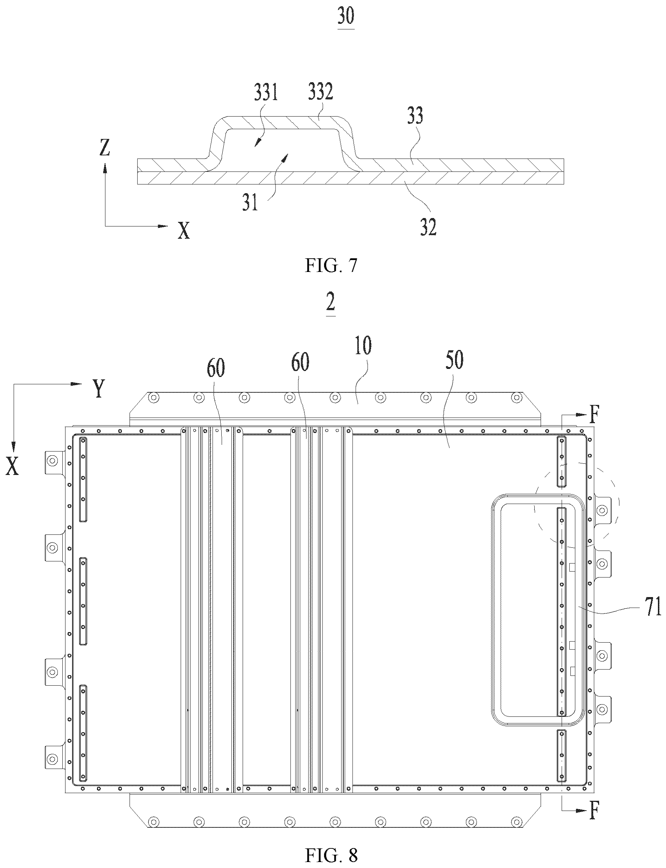

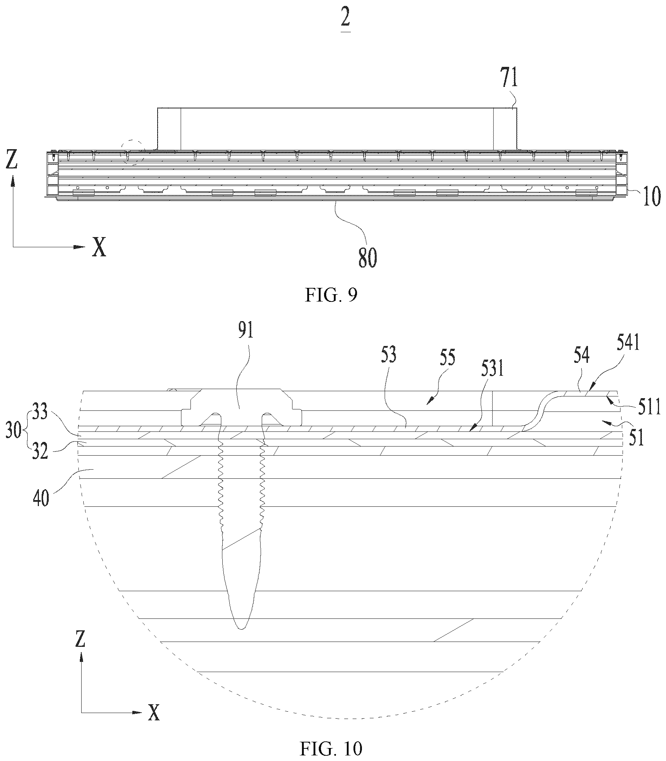

FIG. 6 is an enlarged schematic view of the circled portion C in FIG. 5; FIG. 7 is a partial cross-sectional schematic view taken along the E-E direction in FIG. 6; FIG. 8 is a schematic top view of a battery according to some embodiments of the present application; FIG. 9 is a cutaway schematic view taken along the F-F direction in FIG. 8; FIG. 10 is an enlarged schematic view of the circled portion in FIG. 9.

Referring to FIGs. 6-10, in some embodiments, the heat exchange plate 30 includes a flow channel zone 30a and a non-flow channel zone 30b. The flow channel zone 30a is provided with a flow channel 31 for the heat exchange medium to flow.

The heat exchange medium comes into contact with the flow channel zone 30a and exchanges heat as it flows through the flow channel 31.

In some embodiments, in the thickness direction Z of the heat exchange plate 30, at least part of the flow channel zone 30a protrudes from the non-flow channel zone 30b.

Illustratively, the flow channel zone 30a protrudes from the non-flow channel zone 30b in a direction facing away from the battery cell 20, or may protrude from the non-flow channel zone 30b in a direction toward the battery cell 20.

In some embodiments, the heat exchange plate 30 includes a first plate 32 and a second plate 33 that are stacked. The first plate 32 is connected to the battery cell 20, and the second plate 33 is located on a side of the first plate 32 facing away from the battery cell 20 and is connected to the protection plate 50. The flow channel 31 is formed between the first plate 32 and the second plate 33.

The first plate 32 and the second plate 33 may be independently formed, which enables flexible configuration of the shape of the flow channel 31 so that the difficulty in forming the heat exchange plate 30 can be reduced, and the uniformity of heat exchange can be improved.

In some embodiments, the first plate 32 and the second plate 33 are welded. The weld seam between the first plate 32 and the second plate 33 extends around the entire perimeter to improve the sealing performance.

In some embodiments, the stacking direction of the first plate 32 and the second plate 33 is parallel to the thickness direction Z of the heat exchange plate 30. Optionally, the thickness direction Z of the heat exchange plate 30 is parallel to the vertical direction, and the second plate 33 is located above the first plate 32.

In some embodiments, the first plate 32 is a flat plate. The surface of the first plate 32 is flat, thereby facilitating the arrangement of the battery cells 20.

In some embodiments, a side of the second plate 33 facing the first plate 32 is provided with a fourth recess 331, and the first plate 32 covers the fourth recess 331 and forms the flow channel 31.

In some embodiments, a fourth protrusion 332 is formed on the second plate 33 at a position corresponding to the fourth recess 331, and the fourth protrusion 332 protrudes toward a side distal to the first plate 32. By providing the fourth protrusion 332, the depth of the fourth recess 331 can be increased, the liquid passage area of the flow channel 31 can be enlarged, and the influence of forming the fourth recess 331 on the strength of the second plate 33 can be mitigated, thereby improving the reliability of the second plate 33.

In some embodiments, the fourth protrusion 332 corresponds to the fourth recess 331 in shape.

In some embodiments, the fourth protrusion 332 and the fourth recess 331 may be formed by stamping the second plate 33.

In some embodiments, the heat exchange plate 30 further includes a flow inlet and a flow outlet (not shown), and the flow channel 31 is in communication with the flow inlet and the flow outlet. The heat exchange medium can flow into the flow channel 31 via the flow inlet and flow out the flow channel via the flow outlet.

In some embodiments, the flow inlet may be arranged on the first plate 32, or may be arranged on the second plate 33. The flow outlet may be arranged on the first plate 32, or may be arranged on the second plate 33.

In some embodiments, the protection plate 50 is fixed to the non-flow channel zone 30b. Illustratively, the protection plate 50 is fixed to the non-flow channel zone 30b by means of bonding, welding, fastener-based connection, or other manners.

The non-flow channel zone 30b is not provided with the flow channel 31, and by fixing the protection plate 50 to the non-flow channel zone 30b, when the protection plate 50 is subjected to an impact, the acting force transmitted to the flow channel zone 30a can be reduced and the deformation of the flow channel 31 can thus be reduced.

In some embodiments, the first connecting member 90 passes through the first plate 32 and the second plate 33. The second connecting member 91 passes through the first plate 32 and the second plate 33.

In some embodiments, the second connecting member 91 passes through the protection plate 50, the second plate 33, and the first plate 32, and is fixed to the first beam 40.

In some embodiments, the non-flow channel zone 30b includes a portion where the first plate 32 and the second plate 33 are attached to each other. The flow channel zone 30a includes the fourth protrusion 332 of the second plate 33 and a part of the first plate 32 corresponding to the fourth protrusion 332 in the thickness direction Z.

In some embodiments, in the thickness direction Z, the projection of the flow channel zone 30a is located within the projection of the protection plate 50.

The protection plate 50 can protect the flow channel zone 30a from the upper side, thereby reducing the impact force received by the flow channel zone 30a from the upper side, reducing the deformation of the flow channel zone 30a, improving the uniformity of heat exchange, reducing the risk of breakage of the flow channel zone 30a, and improving the reliability of the battery 2.

In some embodiments, in the thickness direction Z, the flow channel zone 30a is spaced apart from the protection plate 50.

When the protection plate 50 is subjected to pressure, the protection plate 50 may deform. By spacing the flow channel zone 30a apart from the protection plate 50, space for the deformation of the protection plate 50 can be provided, thereby reducing the risk of direct compression of the flow channel zone 30a by the protection plate 50.

In some embodiments, in the thickness direction Z, the projection of the heat exchange plate 30 is located within the projection of the protection plate 50. The protection plate 50 can completely cover the heat exchange plate 30, thereby protecting the heat exchange plate 30 and reducing the impact received by the heat exchange plate 30.

In some embodiments, a part of the non-flow channel zone 30b is fixed to the frame body 10 and the first beam 40. A flow channel 31 is not formed in the non-flow channel zone 30b, and by fixing a part of the non-flow channel zone 30b to the frame body 10 and the first beam 40, when the battery 2 is subjected to an external impact, the force transmitted to the flow channel zone 30a can be reduced, the deformation of the flow channel 31 can be reduced, the uniformity of heat exchange can be improved, and the risk of damage to the flow channel zone 30a and leakage of the heat exchange medium can be reduced.

In some embodiments, at least one of the flow channel zone 30a and the non-flow channel zone 30b is bonded to the protection plate 50. In the embodiments, only the flow channel zone 30a may be bonded to the protection plate 50, or only the non-flow channel zone 30b may be bonded to the protection plate 50, or both the flow channel zone 30a and the non-flow channel zone 30b may be bonded to the protection plate 50.

By bonding the flow channel zone 30a or the non-flow channel zone 30b to the protection plate 50, the connection strength between the heat exchange plate 30 and the protection plate 50 can be increased, and the stability of the battery 2 can be improved.

In some embodiments, a structural adhesive is provided between the flow channel zone 30a and the protection plate 50. Since the structural adhesive is soft, the structural member may deform when the protection plate 50 is subjected to pressure, so as to provide space for the deformation of the protection plate 50, thereby reducing the acting force transmitted to the flow channel zone 30a.

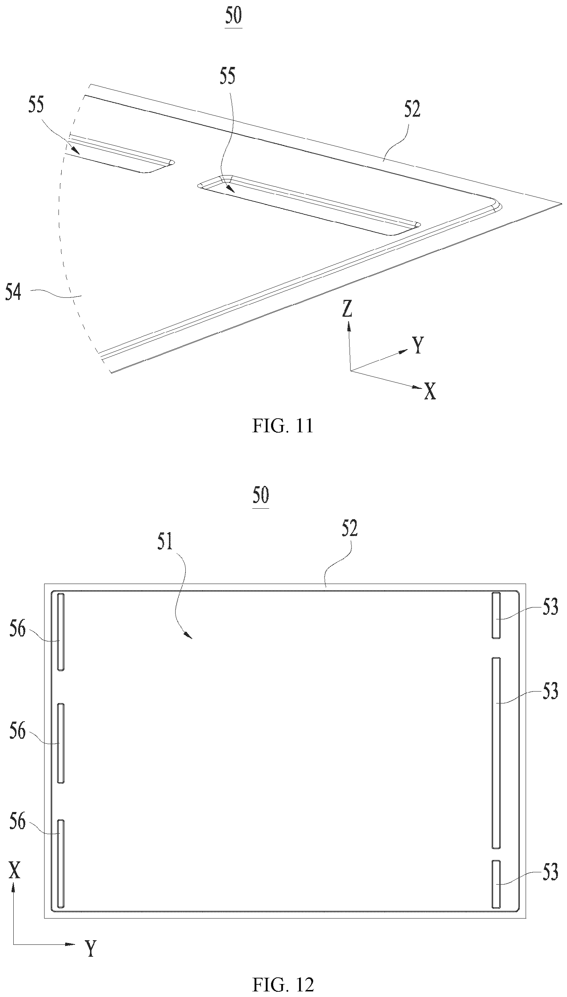

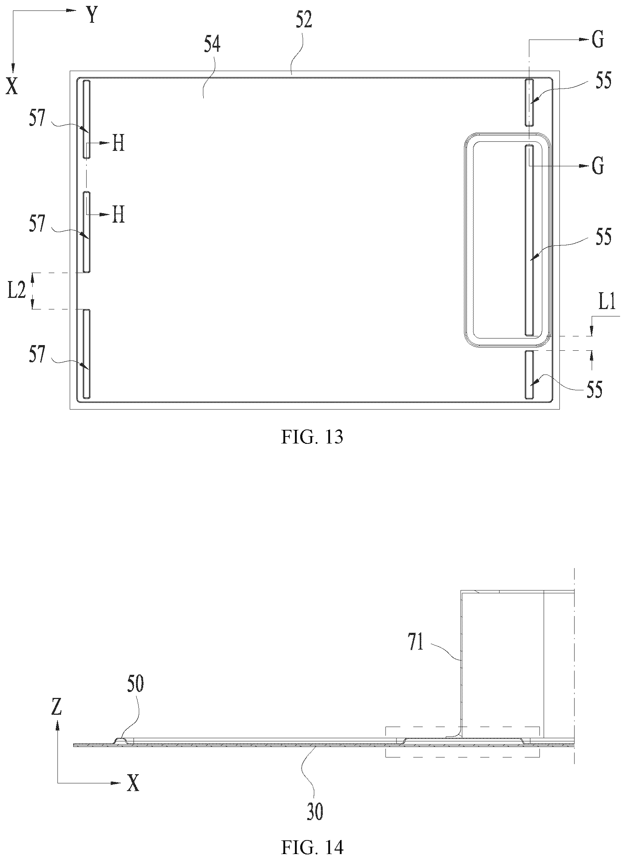

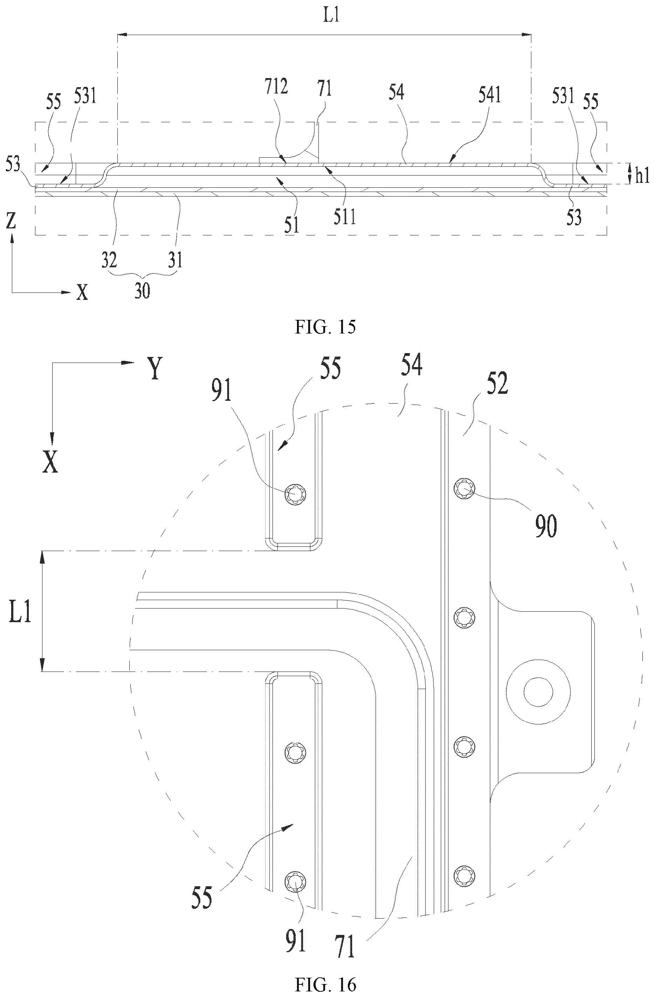

FIG. 11 is an enlarged schematic view of the circled portion D in FIG. 5; FIG. 12 is a schematic bottom view of a protection plate of a battery according to some embodiments of the present application; FIG. 13 is a schematic top view of a protection plate, a heat exchange plate, and a housing body of a battery according to some embodiments of the present application; FIG. 14 is a partial cutaway schematic view taken along the G-G direction in FIG. 13; FIG. 15 is an enlarged schematic view of the boxed portion in FIG. 14; FIG. 16 is an enlarged schematic view of the circled portion in FIG. 8.

Referring to FIGs. 5 and 10-16, in some embodiments, a side of the protection plate 50 facing the heat exchange plate 30 is provided with a first recess 51. In the thickness direction Z of the heat exchange plate 30, the projection of the flow channel zone 30a in the thickness direction Z is located within the projection of the first recess 51.

By providing the first recess 51, clearance can be provided for the flow channel zone 30a, the distance between a bottom surface 511 of the first recess and the flow channel zone 30a can be increased, and the risk of direct compression of the flow channel zone 30a by the protection plate 50 can be reduced.

In some embodiments, the protection plate 50 includes an edge part 52 arranged around the first recess 51. The edge part 52 abuts against the non-flow channel zone 30b, and the edge part 52, the non-flow channel zone 30b, and the frame body 10 are fixedly connected.

The edge part 52 is located at the outer periphery of the protection plate 50, and by fixing the edge part 52 to the non-flow channel zone 30b and the frame body 10, the stability of the protection plate 50 can be improved. The edge part 52 abutting against the non-flow channel zone 30b may further enable sealing of the first recess 51.

In some embodiments, the first connecting member 90 connects the edge part 52, the non-flow channel zone 30b, and the frame body 10.

In some embodiments, the flow channel zone 30a protrudes from the surface of the non-flow channel zone 30b facing the protection plate 50, and a part of the flow channel zone 30a is accommodated in the first recess 51. The first recess 51 can provide clearance for the flow channel zone 30a and provide space for the flow channel region 30a, thereby improving space utilization.

In some embodiments, a structural adhesive is provided in the first recess 51. The structural adhesive bonds the flow channel zone 30a to the protection plate 50. By allowing the structural adhesive to bond the flow channel zone 30a to the protection plate 50, the connection strength between the flow channel zone 30a and the protection plate 50 can be increased, and the stability of the battery 2 can be improved. The first recess 51 can limit the structural adhesive and reduce the overflow of the structural adhesive.

In some embodiments, in the thickness direction Z, the bottom surface 511 of the first recess is spaced apart from the flow channel zone 30a.

When the protection plate 50 is subjected to pressure, the protection plate 50 may deform. By spacing the flow channel zone 30a apart from the bottom surface 511 of the first recess, space for the deformation of the protection plate 50 can be provided, thereby reducing the risk of direct compression of the flow channel zone 30a by the protection plate 50.

In some embodiments, the protection plate 50 further includes a first protrusion 53 protruding from the bottom surface 511 of the first recess. The first protrusion 53 abuts against the non-flow channel zone 30b, and the first protrusion 53, the non-flow channel zone 30b, and the first beam 40 are fixedly connected.

The first protrusion 53 may be of a solid structure, or may be of a hollow structure.

One or a plurality of first protrusions 53 may be provided.

The first protrusion 53 may be connected to the side surface of the first recess 51, or may be spaced apart from the side surface of the first recess 51.

The first protrusion 53 can compensate for the gap between the bottom surface 511 of the first recess and the non-flow channel zone 30b, so as to be able to abut against the non-flow channel zone 30b, thereby achieving the fixed connection of the first protrusion 53, the non-flow channel zone 30b, and the first beam 40, and increasing the strength of the battery 2.

In some embodiments, a top surface 531 of the first protrusion is flush with the surface of the edge part 52 facing the non-flow channel zone 30b.

In some embodiments, the protection plate 50 further includes a second protrusion 54. The second protrusion 54 protrudes from the surface of the edge part 52 facing away from the non-flow channel zone 30b, and the first recess 51 is formed on the protection plate 50 at a position corresponding to the second protrusion 54. By providing the second protrusion 54, the depth of the first recess 51 can be increased, and the strength of the protection plate 50 can be increased.

Illustratively, the second protrusion 54 corresponds to the first recess 51 in shape.

In some embodiments, the first protrusion 53 is connected to the second protrusion 54. Illustratively, the first protrusion 53 and the second protrusion 54 protrude in opposite directions. The first protrusion 53 protrudes toward the heat exchange plate 30, and the second protrusion 54 protrudes away from the heat exchange plate 30.

By providing the first protrusion 53 and the second protrusion 54, the structural strength of the protection plate 50 can also be increased, and the deformation of the protection plate 50 can also be reduced.

In some embodiments, the protection plate 50 is further provided with a second recess 55. The second recess 55 is recessed from the surface of the protection plate 50 facing away from the heat exchange plate 30, and the second recess 55 is formed on the protection plate 50 at a position corresponding to the first protrusion 53.

By providing the second recess 55, the forming process of the protection plate 50 can be simplified, the weight of the protection plate 50 can be reduced, and the difficulty in connecting the first protrusion 53 to the non-flow channel zone 30b can be reduced.

Illustratively, illustratively, the first protrusion 53 corresponds to the second recess 55 in shape.

In some embodiments, in the thickness direction Z of the heat exchange plate 30, the minimum depth h1 of the second recess 55 is 0.1 mm to 50 mm. Optionally, the minimum depth h1 of the second recess 55 is 1 mm to 5 mm.

In the embodiments of the present application, h1 is limited to be greater than or equal to 0.1 mm, so as to increase the structural strength of the protection plate 50. h1 is limited to be less than or equal to 50 mm to reduce the dimension of the protection plate 50 in the thickness direction Z, thereby improving the space utilization.

In some embodiments, a part of the second connecting member 91 is accommodated in the second recess 55. The second recess 55 may further provide an accommodating space 10a for the second connecting member 91, thereby improving the space utilization.

In some embodiments, in a direction away from the heat exchange plate 30, a part of the second connecting member 91 located at the outer side of the protection plate 50 does not extend beyond a top surface 541 of the second protrusion. In the embodiments of the present application, the additional space occupied by the second connecting member 91 in the thickness direction Z can be reduced, thereby improving the space utilization.

In some embodiments, the second recess 55 is further filled with a rubber filler. The rubber filler can fill the remaining space of the second recess 55, thereby improving the flatness of the appearance of the protection plate 50.

In some embodiments, the protection plate 50 may be formed according to the following steps: providing a flat plate structure; stamping a side of the flat plate structure to enable the flat plate structure to form the first recess 51 and the second protrusion 54 at stamping positions; and then stamping the top surface 541 of the second protrusion to form the first protrusion 53 and the second recess 55 at stamping positions.

In some embodiments, an end surface 712 is provided at an end of the housing body 71 facing the protection plate 50. The end surface 712 abuts against the protection plate 50. In the thickness direction Z, the projection of the end surface 712 does not overlap with the projection of the second recess 55.

Illustratively, the end surface 712 of the housing body 71 abuts against the top surface 541 of the second protrusion.

In the embodiments of the present application, the end surface 712 of the housing body 71 may be arranged offset from the second recess 55, so as to reduce the risk of communication between the internal and external spaces of the housing body 71 via the second recess 55, and improve the sealing performance and reliability of the power distribution box 70.

In some embodiments, the first beam 40 extends in the first direction X; the protection plate 50 is provided with a plurality of second recesses 55. The plurality of second recesses 55 are spaced apart from each other in the first direction X.

By providing the plurality of second recesses 55, a plurality of sites that can be connected to the non-flow channel zone 30b can be provided for the protection plate 50, thereby increasing the connection strength between the protection plate 50, the non-flow channel zone 30b, and the first beam 40.

In some embodiments, a part of the end surface 712 is fixed to a part of the protection plate 50 located between two adjacent second recesses 55.

In the embodiments of the present application, by using the part between the second recesses 55 to fix the housing body 71, the second recesses 55 can be offset from the end surface 712 of the housing body 71, and the space utilization can be improved as well.

In some embodiments, in the first direction X, the minimum distance L1 between adjacent second recesses 55 is 1 mm to 200 mm. Optionally, L1 is 20 mm to 100 mm.

In the embodiments of the present application, L1 is limited to be greater than or equal to 1 mm to enable the connection area between the housing body 71 and the protection plate 50 to meet the requirements, thereby improving the sealing performance of the housing body 71. In the embodiments of the present application, L1 is limited to be less than or equal to 200 mm to reserve enough space for the second recesses 55, thereby providing more sites for the connection between the protection plate 50 and the non-flow channel zone 30b.

In some embodiments, a plurality of first protrusions 53 are provided, and the plurality of first protrusions 53 are spaced apart from each other in the first direction X. The first protrusions 53 and the second recesses 55 are arranged in a one-to-one correspondence.

In some embodiments, in the thickness direction Z, the projection of at least one second recess 55 is located within the projection of the space defined by the housing body 71 in an enclosing manner.

In some embodiments, two second recesses 55 are arranged on both sides of the housing body 71 in the first direction X, respectively.

In some embodiments, the second recesses 55 are correspondingly provided with a plurality of second connecting members 91. Illustratively, the second connecting member 91 is an FDS, which passes through the protection plate 50 and the heat exchange plate 30 and is threadedly connected to the first beam 40.

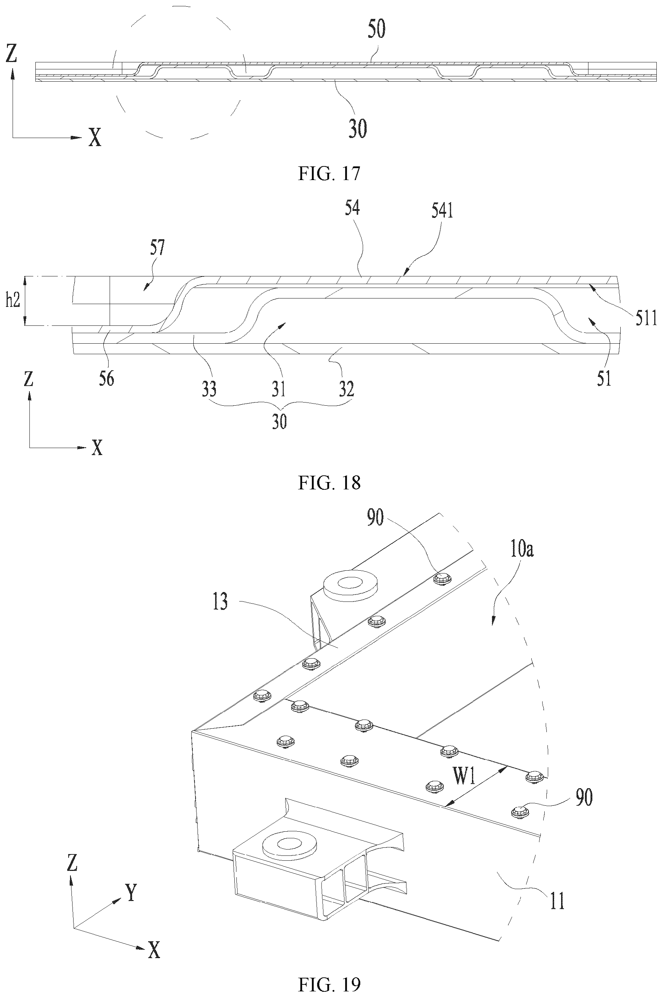

FIG. 17 is a partial cutaway schematic view taken along the H-H direction in FIG. 13; FIG. 18 is an enlarged schematic view of the circled portion in FIG. 17; FIG. 19 is an enlarged schematic view of the circled portion B in FIG. 2.

Referring to FIGs. 2, 12, 13, and 17-19, in some embodiments, the protection plate 50 further includes a third protrusion 56 protruding from the bottom surface 511 of the first recess. The third protrusion 56 abuts against the non-flow channel zone 30b, and the third protrusion 56, the non-flow channel zone 30b, and the frame body 10 are fixedly connected.

The third protrusion 56 may be of a solid structure, or may be of a hollow structure.

One or a plurality of third protrusions 56 may be provided.

The third protrusion 56 may be connected to the side surface of the first recess 51, or may be spaced apart from the side surface of the first recess 51.

The third protrusion 56 can compensate for the gap between the bottom surface 511 of the first recess and the non-flow channel zone 30b, so as to be able to abut against the non-flow channel zone 30b, thereby achieving the fixed connection of the third protrusion 56, the non-flow channel zone 30b, and the frame body 10, and increasing the strength of the battery 2.

In some embodiments, the protection plate 50 includes a plurality of third protrusions 56 spaced apart from each other in the first direction X. By providing the plurality of third protrusions 56, a plurality of sites that can be connected to the non-flow channel zone 30b can be provided for the protection plate 50, thereby increasing the connection strength between the protection plate 50, the non-flow channel zone 30b, and the frame.

In some embodiments, in the first direction X, a part of the flow channel zone 30a is located between two adjacent third protrusions 56.

In the embodiments of the present application, the space between the third protrusions 56 can be used to improve space utilization on the premise that the third protrusions 56 are offset from the flow channel zone 30a.

In some embodiments, at least three third protrusions 56 are provided. The three third protrusions 56 are sequentially defined as a first third protrusion 56, a second third protrusion 56, and a third third protrusion 56 in the first direction X, a part of the flow channel zone 30a is located between the first third protrusion 56 and the second third protrusion 56 and is in communication with the flow inlet, and the other part of the flow channel zone 30a is located between the second third protrusion 56 and the third third protrusion 56 and is in communication with the flow outlet.

In some embodiments, the protection plate 50 is further provided with a third recess 57. The third recess 57 is recessed from the surface of the protection plate 50 facing away from the heat exchange plate 30, and the third recess 57 is formed on the protection plate 50 at a position corresponding to the third protrusion 56.

By providing the third recess 57, the forming process of the protection plate 50 can be simplified, the weight of the protection plate 50 can be reduced, and the difficulty in connecting the third protrusion 56 to the non-flow channel zone 30b can be reduced.

Illustratively, illustratively, the third protrusion 56 corresponds to the third recess 57 in shape.

In some embodiments, in the thickness direction Z, the minimum depth h2 of the third recess 57 is 0.1 mm to 50 mm. Optionally, the minimum depth h2 of the third recess 57 is 1 mm to 5 mm.

In some embodiments, in the first direction X, the minimum distance L2 between adjacent third recesses 57 is 1 mm to 200 mm. Optionally, L2 is 20 mm to 100 mm.

In some embodiments, at least one first connecting member 90 connects the third protrusion 56, the non-flow channel zone 30b, and the frame body 10.

In some embodiments, a part of the first connecting member 90 is accommodated in the third recess 57. The third recess 57 may further provide an accommodating space 10a for the first connecting member 90, thereby improving the space utilization.

In some embodiments, in a direction away from the heat exchange plate 30, a part of the first connecting member 90 located at the outer side of the protection plate 50 does not extend beyond a top surface 541 of the second protrusion. In the embodiments of the present application, the additional space occupied by the first connecting member 90 in the thickness direction Z can be reduced, thereby improving the space utilization.

In some embodiments, the third recess 57 is further filled with a rubber filler. The rubber filler can fill the remaining space of the third part, thereby improving the flatness of the appearance of the protection plate 50.

In some embodiments, the protection plate 50 may be formed according to the following steps: providing a flat plate structure; stamping a side of the flat plate structure to enable the flat plate structure to form the first recess 51 and the second protrusion 54 at stamping positions; and then stamping the top surface 541 of the second protrusion to form the first protrusion 53, the second recess 55, the third protrusion 56, and the third recess 57 at stamping positions.

In some embodiments, the frame body 10 includes the second beam 11 and the third beam 12 oppositely arranged in the second direction Y, the first beam 40, the second beam 11, and the third beam 12 all extend in the first direction X, and the first direction X is perpendicular to the second direction Y. In the second direction Y, the battery cell 20 is located between the second beam 11 and the first beam 40.

In some embodiments, the third protrusion 56, the non-flow channel zone 30b, and the second beam 11 are fixedly connected, so as to increase the structural strength of the battery 2 and reduce the risk of connection failure between the heat exchange plate 30 and the frame body 10.

In some embodiments, some first connecting members 90 fixedly connect the edge part 52, the non-flow channel zone 30b, and the second beam 11, and other first connecting members 90 fixedly connect the third protrusion 56, the non-flow channel zone 30b, and the second beam 11.

In some embodiments, referring to FIGs. 4 and 19, in the second direction Y, the minimum dimension W1 of the second beam 11 is greater than the minimum dimension W2 of the third beam 12.

The second beam 11 has a large dimension and strength and thus can withstand the expansion force of the battery cell 20 and be fixedly connected to both the third protrusion 56 and the edge part 52, thereby increasing the overall structural strength of the battery 2.

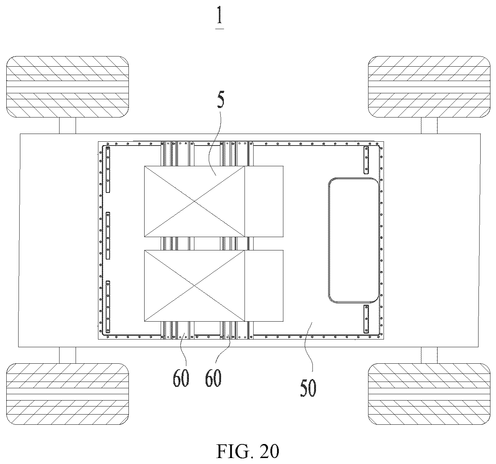

FIG. 20 is a schematic view of an electric device according to some other embodiments of the present application.

Referring to FIG. 20, the present application further provides an electric device, which includes the battery 2 according to any one of the above embodiments. The battery 2 is used to provide electric energy for the electric device. The electric device may be any one of the aforementioned devices or systems that use the battery 2.

In some embodiments, the electric device is a vehicle. The heat exchange plate 30 can be embedded into the interior of the vehicle, thereby reducing the risk of external impact on the heat exchange plate 30.

In some embodiments, the protection plate 50 is at least a part of the floor of the vehicle. By using the protection plate 50 of the battery 2 as the floor, vehicle parts can be saved, the integration level of the vehicle can be improved, and the assembly process of the vehicle can be simplified. The protection plate 50 can withstand passenger stepping, reduce the deformation of the flow channel 31, and improve the uniformity of heat exchange.

In some embodiments, the vehicle includes a seat 5, and the seat 5 is connected to the protection plate 50. The protection plate 50 can carry the seat 5, thereby improving the space utilization of the vehicle.

In some embodiments, the seat 5 is mounted on the reinforcing beam 60.

Referring to FIGs. 2-19, the embodiments of the present application provide a battery 2. The battery includes a frame body 10, a battery cell 20, a heat exchange plate 30, a protection plate 50, a first beam 40, a power distribution box 70, a reinforcing beam 60, and a bottom plate 80.

The frame body 10 defines an accommodating space 10a in an enclosing manner, and the battery cell 20 is arranged in the accommodating space 10a. A first opening 10b and a second opening 10c are formed on upper and lower sides of the accommodating space 10a in the vertical direction, respectively. The heat exchange plate 30 is fixed to the frame body 10 and lids the first opening 10b, and the heat exchange plate 30 is configured to exchange heat with the battery cell 20. The bottom plate 80 lids the second opening 10c and is connected to the frame body 10.

The first beam 40 is arranged in the accommodating space 10a, and both ends of the first beam 40 are connected to the frame body 10. The protection plate 50 is arranged on a side of the heat exchange plate 30 distal to the battery cell 20 and is fixed to the heat exchange plate 30. The reinforcing beam 60 is arranged on the side of the protection plate 50 facing away from the heat exchange plate 30 and is fixed to the protection plate 50, and the reinforcing beam 60 is configured for the mounting of a seat 5 of a vehicle.

The power distribution box 70 includes a housing body 71 and an electric component 72. The housing body 71 is located on the side of the protection plate 50 facing away from the heat exchange plate 30, the housing body 71 and the protection plate 50 define an accommodating cavity, and the electric component 72 is arranged in the accommodating cavity and is electrically connected to the battery cell 20.

The heat exchange plate 30 includes a flow channel zone 30a and a non-flow channel zone 30b. The flow channel zone 30a is provided with a flow channel 31 for a heat exchange medium to flow, and the flow channel zone 30a protrudes from a side of the non-flow channel zone 30b facing the protection plate 50.

A side of the protection plate 50 facing the heat exchange plate 30 is provided with a first recess 51. The protection plate 50 includes an edge part 52 arranged around the first recess 51. The edge part 52 abuts against the non-flow channel zone 30b, and the edge part 52, the non-flow channel zone 30b, and the frame body 10 are fixedly connected.

The protection plate 50 further includes a first protrusion 53 protruding from a bottom surface 511 of the first recess. The first protrusion 53 abuts against the non-flow channel zone 30b, and the first protrusion 53, the non-flow channel zone 30b, and the first beam 40 are fixedly connected.

The protection plate 50 further includes a second protrusion 54. The second protrusion 54 protrudes from the surface of the edge part 52 facing away from the non-flow channel zone 30b, and the first recess 51 is formed on the protection plate 50 at a position corresponding to the second protrusion 54.

The protection plate 50 is further provided with a second recess 55. The second recess 55 is recessed from the surface of the protection plate 50 facing away from the heat exchange plate 30, and the second recess 55 is formed on the protection plate 50 at a position corresponding to the first protrusion 53.

The protection plate 50 further includes a third protrusion 56 protruding from the bottom surface 511 of the first recess. The third protrusion 56 abuts against the non-flow channel zone 30b, and the third protrusion 56, the non-flow channel zone 30b, and the frame body 10 are fixedly connected.

The protection plate 50 is further provided with a third recess 57. The third recess 57 is recessed from the surface of the protection plate 50 facing away from the heat exchange plate 30, and the third recess 57 is formed on the protection plate 50 at a position corresponding to the third protrusion 56.

It should be noted that unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

## Claims

1. A battery, comprising:
a frame body defining an accommodating space in an enclosing manner, wherein one end of the accommodating space is provided with a first opening;
a battery cell arranged in the accommodating space;
a first beam arranged in the accommodating space, wherein both ends of the first beam are connected to the frame body, and the first beam is configured to limit expansion of the battery cell; and
a heat exchange plate lidding the first opening and configured to exchange heat with the battery cell, wherein the heat exchange plate is fixedly connected to the frame body and the first beam.

2. The battery according to claim 1, wherein the heat exchange plate comprises a flow channel zone and a non-flow channel zone, and the flow channel zone is provided with a flow channel for a heat exchange medium to flow;
a part of the non-flow channel zone is fixed to the frame body and the first beam.

3. The battery according to claim 1 or 2, further comprising a protection plate, wherein the protection plate is arranged on a side of the heat exchange plate distal to the battery cell and is connected to the heat exchange plate.

4. The battery according to claim 3, wherein a side of the protection plate facing the heat exchange plate is provided with a first recess;
the heat exchange plate comprises the flow channel zone and the non-flow channel zone, and the flow channel zone is provided with the flow channel for the heat exchange medium to flow;
in a thickness direction of the heat exchange plate, a projection of the flow channel zone in the thickness direction is located within a projection of the first recess;
the protection plate comprises an edge part arranged around the first recess, the edge part abuts against the non-flow channel zone, and the edge part, the non-flow channel zone, and the frame body are fixedly connected.

5. The battery according to claim 4, wherein in the thickness direction, a bottom surface of the first recess is spaced apart from the flow channel zone.

6. The battery according to claim 4 or 5, wherein the protection plate further comprises a first protrusion protruding from the bottom surface of the first recess, the first protrusion abuts against the non-flow channel zone, and the first protrusion, the non-flow channel zone, and the first beam are fixedly connected.

7. The battery according to claim 6, wherein the protection plate further comprises a second protrusion, the second protrusion protrudes from a surface of the edge part facing away from the non-flow channel zone, and the first recess is formed on the protection plate at a position corresponding to the second protrusion;
the first protrusion is connected to the second protrusion.

8. The battery according to claim 6 or 7, wherein the protection plate is further provided with a second recess, the second recess is recessed from a surface of the protection plate facing away from the heat exchange plate, and the second recess is formed on the protection plate at a position corresponding to the first protrusion.

9. The battery according to claim 8, wherein the battery further comprises a power distribution box, and the power distribution box comprises a housing body and an electric component, wherein the housing body is located on a side of the protection plate facing away from the heat exchange plate, the housing body and the protection plate define an accommodating cavity, and the electric component is arranged in the accommodating cavity and is electrically connected to the battery cell;
an end of the housing body facing the protection plate is provided with an end surface, and the end surface abuts against the protection plate; in the thickness direction, a projection of the end surface does not overlap with a projection of the second recess.

10. The battery according to claim 9, wherein
the first beam extends in a first direction; the protection plate is provided with a plurality of second recesses, and the plurality of second recesses are spaced apart from each other in the first direction;
a part of the end surface is fixed to a part of the protection plate located between two adjacent second recesses.

11. The battery according to any one of claims 4 to 10, wherein the protection plate further comprises a third protrusion protruding from the bottom surface of the first recess, the third protrusion abuts against the non-flow channel zone, and the third protrusion, the non-flow channel zone, and the frame body are fixedly connected.

12. The battery according to claim 11, wherein the protection plate comprises a plurality of third protrusions spaced apart from each other in the first direction;
in the first direction, a part of the flow channel zone is located between two adjacent third protrusions.

13. The battery according to claim 11 or 12, wherein the frame body comprises a second beam and a third beam oppositely arranged in a second direction, the first beam, the second beam, and the third beam all extend in the first direction, and the first direction is perpendicular to the second direction;
in the second direction, the battery cell is located between the second beam and the first beam;
the third protrusion, the non-flow channel zone, and the second beam are fixedly connected.

14. The battery according to claim 13, wherein in the second direction, a minimum dimension of the second beam is greater than a minimum dimension of the third beam.

15. The battery according to any one of claims 3 to 14, further comprising a first connecting member and a second connecting member, wherein the first connecting member fixes the protection plate and the heat exchange plate to the frame body, and the second connecting member fixes the protection plate and the heat exchange plate to the first beam.

16. The battery according to any one of claims 3 to 15, further comprising a reinforcing beam, wherein the reinforcing beam is arranged on the side of the protection plate facing away from the heat exchange plate and is fixed to the protection plate.

17. The battery according to claim 16, wherein the reinforcing beam is configured for mounting of a seat of a vehicle.

18. The battery according to any one of claims 3 to 17, wherein
the heat exchange plate comprises the flow channel zone and the non-flow channel zone, and the flow channel zone is provided with the flow channel for the heat exchange medium to flow;
at least one of the flow channel zone and the non-flow channel zone is bonded to the protection plate.

19. The battery according to any one of claims 1 to 18, wherein the first opening is arranged at an upper end of the accommodating space in a vertical direction, and the heat exchange plate is located on an upper side of the frame body.

20. The battery according to any one of claims 1 to 19, wherein the battery cell is fixed to the heat exchange plate.

21. The battery according to any one of claims 1 to 20, wherein the other end of the accommodating space is provided with a second opening;
the battery further comprises a bottom plate, and the bottom plate lids the second opening and is connected to the frame body.

22. An electric device, comprising the battery according to any one of claims 1 to 21, wherein the battery is configured to provide electric energy.
